# EUROPÄISCHE PATENTSCHRIFT

(11) **EP 1 488 226 B1**
(45) Veröffentlichungstag und Bekanntmachung des Hinweises auf die Patenterteilung: **29.08.2012**
(21) Anmeldenummer: 03718643.4
(22) Anmeldetag: 28.03.2003
(51) Int. Cl.: G01N 30/78, G01N 30/46

(54) **GASCHROMATOGRAPH ZUR ANALYSE VON ERDGAS**
GAS CHROMATOGRAPH FOR ANALYSING NATURAL GAS
CHROMATOGRAPHE POUR PHASE GAZEUSE POUR L'ANALYSE DE GAZ NATUREL

(30) Priorität: 28.03.2002 DE 10214211; 25.09.2002 DE 10244601
(43) Veröffentlichungstag der Anmeldung: 22.12.2004
(73) Patentinhaber: SIEMENS AKTIENGESELLSCHAFT, 80333 München (DE)
(72) Erfinder: MÜLLER, Friedhelm, 76351 Linkenheim-Hochstetten (DE); GELLERT, Udo, 76756 Bellheim (DE)
(86) Internationale Anmeldenummer: PCT/DE2003/001040
(87) Internationale Veröffentlichungsnummer: WO 2003/083467

(56) Entgegenhaltungen:
- WO-A-02/50530
- DE-A- 2 840 612
- DE-A- 10 105 728
- DE-A- 19 808 213
- US-A1- 2001 029 772

## Beschreibung

Die Erfindung betrifft einen Gaschromatographen nach dem Oberbegriff von Anspruch 1.

Ein derartiger Gaschromatograph ist aus der DE 198 08 213 A1 bekannt.

Während zur Trennung einfacher Stoffgemische eine Trennsäule als Trenneinrichtung ausreicht, erfordern komplexe Stoffgemische eine Säulenschaltung, bei der zwei oder mehr Trennsäulen mit verschiedenen Trenneigenschaften hintereinander in Reihe und ggf. parallel geschaltet sind. Ein Beispiel für eine Säulenschaltung ist aus der EP 0 406 757 A2 bekannt. Zwischen den verschalteten Trennsäulen sind steuerbare Umschalteinrichtungen vorgesehen, um ankommende, teilweise getrennte Stoffe auszuschleusen, in einen Detektor umzuleiten oder in eine nachgeordnete Trennsäule bzw. eine von zwei oder mehreren nachgeordneten parallelen Trennsäulen weiterzuleiten. Je nach Erfordernis können die verschalteten Trennsäulen unterschiedlich temperiert sein. Über die Umschalteinrichtungen können schließlich die einzelnen Trennsäulen rückgespült werden. Im Einzelnen ergeben sich jedoch bei Säulenschaltungen folgende Nachteile. Stoffe, die ausgeschleust oder in einen Detektor umgeleitet wurden, stehen für eine weitere Analyse nicht mehr zur Verfügung. Neben dem erheblichen gerätetechnischen Aufwand für Umschalteinrichtungen können diese bei Fehlfunktion das Analysenergebnis verfälschen. Die Umschaltzeitpunkte für die Umschalteinrichtungen sind u. a. auch von dem zu analysierenden Stoffgemisch abhängig und daher oft nur ungenau bestimmbar, so dass es in der Praxis nicht möglich ist, für jeden Anwendungsfall gezielt einzelne Stoffe oder Stoffgruppen auszuschleusen oder umzuleiten. In der Regel werden daher Stoffe, deren Konzentration in dem Stoffgemisch zu bestimmen ist, bis an das Ende der Trennvorrichtung geleitet und dort detektiert.

Der aus oben erwähnten DE 198 08 213 A1 bekannte Gaschromatograph dient zur Gasbeschaffenheitsmessung von Erdgas. Die Trennsäule des Chromatographen ist in mehrere, den bei der Trennung entstehenden Fraktionen zugeordnete Abschnitte aufgeteilt und weist zwischen diesen Bereichen jeweils auf die anfallende Fraktion speziell abgestimmte Infrarotsensoren auf. Jeder dieser Infrarotsensoren erfasst dabei etwa zeitgleich die verschieden schnellen Komponenten und meldet diese entsprechend an ein Verarbeitungssystem.

Der erfindungsgemäße Gaschromatograph ist durch die Merkmale des Anspruchs 1 definiert.

Die Analyse von Erdgas wird somit mit einer einzigen Trennsäulenkombination, d. h. auf einem einzigen Analysenweg, ermöglicht durch einen Gaschromatographen
- mit einer ersten Trennsäule, gefolgt von einem ersten Detektor, die zur Trennung bzw. Detektion von Propan und höheren Kohlenwasserstoffen (wie Butan, Pentan, Hexan usw.) ausgebildet sind,
- mit einer zweiten Trennsäule gefolgt von einem zweiten Detektor, die zur Trennung bzw. Detektion von Kohlendioxid und Ethan ausgebildet sind, und
- mit einer dritten Trennsäule gefolgt von einem dritten Detektor, die zur Trennung bzw. Detektion von Stickstoff und Methan und erforderlichenfalls Sauerstoff und Kohlenmonoxid ausgebildet sind,
- wobei die Trennsäulen und die Detektoren in einer Reihenschaltung angeordnet sind und zwischen der zweiten Trennsäule und der dritten Trennsäule eine steuerbare Umschalteinrichtung zur Ausschleusung von auf das Methan folgenden Eluaten (Kohlendioxid, Ethan, Propan usw.) vorgesehen ist und
- wobei zumindest der erste und zweite Detektor dazu ausgebildet sind, sie durchströmende Stoffgemische zerstörungsfrei zu detektieren.

Durch diese Trennsäulenkombination lässt sich die Zusammensetzung von Erdgas auf einem einzigen Analysenweg bestimmen, wobei Zykluszeiten kleiner als 5 Minuten erreicht werden. Mit dem Ausschleusen der auf das Methan folgenden Eluate werden diese Eluate von der dritten Trennsäule ferngehalten, die speziell für die Trennung von Stickstoff und Methan und erforderlichenfalls Sauerstoff und Kohlenmonoxid ausgebildet ist und aus der daher eindringende nachfolgende Eluate nur unter größerem Aufwand entfernt werden könnten.

Um auch noch längerkettige Kohlenwasserstoffe als beispielsweise n-Hexan detektieren zu können, ohne dass dazu allzu lange Retentionszeiten erforderlich sind, ist in vorteilhafter Weise vorgesehen, dass nach dem Detektieren eines vorgegebenen höheren, d. h. längerkettigen Kohlenwasserstoffs, hier z. B. n-Hexan, mittels des ersten Detektors die erste und zweite Trennsäule über die steuerbare Umschalteinrichtung mit Trägergas rückspülbar sind und dass vor der ersten Trennsäule ein weiterer Detektor zur Detektion von auf den vorgegebenen höheren Kohlenwasserstoff folgenden Eluaten angeordnet ist.

Als besonders vorteilhaft hat sich eine Trennsäulenkombination herausgestellt, bei der die erste Trennsäule eine WCOT(wall coated open tubular)-Säule mit unpolarer stationärer Phase, die zweite Trennsäule eine PLOT(porous layer open tubular)-Säule mit einer unpolaren stationären Phase und die dritte Trennsäule eine PLOT-Säule mit Molekularsieb, insbesondere 5 Å, ist. Der Durchmesser der Trennsäulen beträgt vorzugsweise 0,25 mm.

Für den mindestens einen weiteren Detektor kommen nur Detektoren infrage, die das Stoffgemisch nicht zerstören, also beispielsweise ein geeigneter Wärmeleitfähigkeitsdetektor, optischer Detektor oder mit akustischen Oberflächenwellen arbeitender Detektor. Um die Trennleistung der Trenneinrichtung nicht zu beeinträchtigen, ist dabei der von dem Stoffgemisch durchströmte Messpfad des weiteren Detektors vorzugsweise in der Weise ausgebildet, dass seine Querschnittsabmessungen zumindest annähernd den Querschnittsabmessungen der Trenneinrichtung entsprechen. Dadurch wird verhindert, dass der möglichst kurze und scharf begrenzte Dosierpfropf, in dessen Form das Stoffgemisch in die Trenneinrichtung eingeleitet wird, an der Stelle des weiteren Detektors gestört und die bereits erreichte Trennung rückgängig gemacht bzw. weitere Trennungen verhindert werden.

Entsprechend einer bevorzugten Ausbildung des erfindungsgemäßen Gaschromatographen besteht der weitere Detektor aus einem Wärmeleitfähigkeitsdetektor mit in einer Brückenschaltung angeordneten Heizwiderständen, von denen zwei in den beiden unterschiedlichen Brückenhälften einander diagonal gegenüberliegende Heizwiderstände in dem Messpfad angeordnet sind; die beiden anderen Heizwiderstände liegen dann in einem Referenzpfad.

Zur weiteren Erläuterung der Erfindung wird im Folgenden auf die Figuren der Zeichnung Bezug genommen; im Einzelnen zeigen:
- Figur 1: ein Ausführungsbeispiel eines Gaschromatographen mit einem Detektor am Ende und mindestens einem weiteren Detektor im Verlauf einer Trenneinrichtung,
- Figur 2: ein Ausführungsbeispiel für den mindestens einen weiteren Detektor und
- Figur 3: ein Ausführungsbeispiel des erfindungsgemäßen Gaschromatographen zur Analyse von Erdgas.

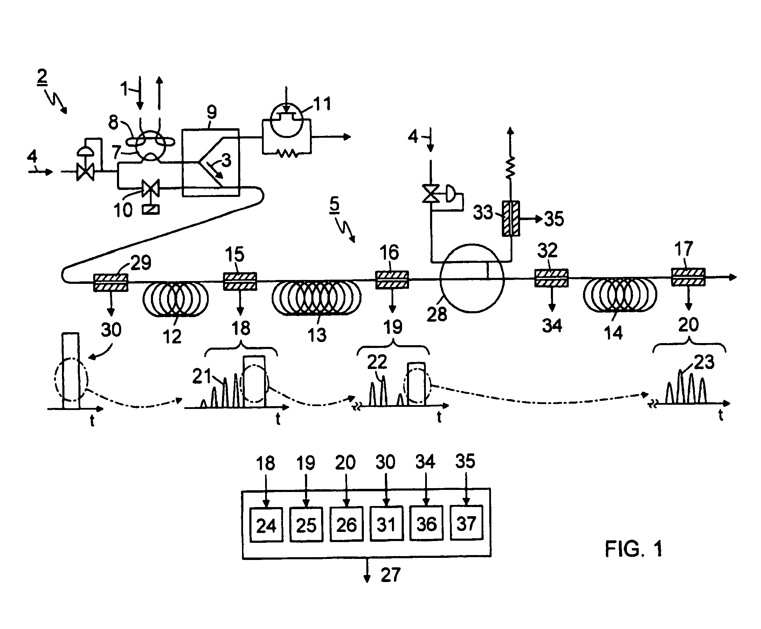

Figur 1 zeigt einen Gaschromatographen zur Analyse eines Stoffgemischs (Probe) 1, das nach Entnahme aus einem technischen Prozess und Aufbereitung, wie z. B. Verdampfung, einer Dosiereinrichtung 2 zugeführt wird, wie sie beispielsweise aus der WO 00/17634 bekannt ist. Die Dosiereinrichtung 2 dient dazu, zu einem vorgegebenen Zeitpunkt eine vorgegebene Dosiermenge der Probe 1 in Form eines kurzen und scharf begrenzten Probenpfropfes 3 in einen Trägergasstrom 4 einzuschleusen und einer Trenneinrichtung 5 zuzuführen. Dazu weist die Dosiereinrichtung 2 ein Dosierventil 7 auf, welches in einer hier gezeigten ersten Schaltstellung die Probe 1 in ein Dosiervolumen 8 leitet. In einer zweiten, um 60° gedrehten Schaltstellung wird das Dosiervolumen 8 in den Weg für das Trägergas 4 geschaltet, das die Probe 1 aus dem Dosiervolumen 8 einem Injektor 9 zuführt. Solange ein Magnetventil 10 geöffnet ist, fließt das Trägergas 4 durch das Magnetventil 10 und den Injektor 9 in die Trenneinrichtung 5, während die Probe 1 aus dem Dosiervolumen 8 über ein zur Justierung des Injektors 9 dienendes Membranventil 11 nach außen abgeleitet wird. Wird das Magnetventil 10 für eine vorgegebene Dauer geschlossen, so wird in dem Injektor 9 aus der Probe 1 ein Teil abgezweigt und als scharf begrenzter Probenpfropf 3 in die Trenneinrichtung 5 eingeschleust.

Die Trenneinrichtung 5 dient dazu, die in dem Probenpfropf 3 enthaltenen Stoffe beim Durchströmen der Trenneinrichtung 5 zu trennen, um sie nacheinander detektieren und quantitativ bestimmen zu können. Bei dem hier gezeigten Beispiel besteht die Trenneinrichtung 5 aus drei aufeinander folgenden Abschnitten in Form von hintereinander geschalteten Trennsäulen 12, 13, 14, die unterschiedliche Trenneigenschaften aufweisen und unterschiedlich temperierbar sind. Am Ende jeder Trennsäule 12, 13, 14 ist jeweils ein Detektor 15, 16 bzw. 17 zur Detektion von vorgegebenen und bis dahin vollständig getrennten Stoffen des Stoffgemischs 1 angeordnet. Die Detektoren 15, 16 und 17 liefern Detektorsignale 18, 19, 20, die für jeden getrennten Stoff einen Peak, z. B. 21, 22, 23, aufweisen, dessen Peakfläche zu der Stoffmenge proportional ist. In den Detektoren 15, 16, 17 nachgeordneten Auswerteeinrichtungen 24, 25, 26 werden die Detektorsignale 18, 19, 20 zur quantitativen Bestimmung der vorgegebenen und bis dahin vollständig getrennten Stoffe ausgewertet. Das dabei erhaltene Analysenergebnis 27 kann einer Prozesssteuer- und/oder - Regeleinrichtung zugeführt werden, die in Abhängigkeit von dem Ergebnis 27 steuernd oder regelnd in den Prozess eingreift, aus dem die Probe 1 entnommen wurde. Hinter dem Detektor 16 ist zwischen den Trennsäulen 13 und 14 eine Umschalteinrichtung 28 eingefügt, die dazu dient, die Trennsäulen 12 und 13 mit Trägergas 4 rückzuspülen, wenn die Detektoren 15 und 16 die von ihnen zu detektierenden getrennten Stoffe detektiert haben und die bis dahin noch nicht getrennten Stoffe in die letzte Trennsäule 14 eingetreten sind.

Zur Validierung des Analysenergebnisses 27 ist zwischen der Dosiereinrichtung 2 und der Trenneinrichtung 5 ein zusätzlicher Detektor 29 angeordnet, der den Probenpfropf 3 zerstörungsfrei detektiert. Der Detektor 29 liefert dabei ein zusätzliches Detektorsignal 30, aus dem in einer Auswerteeinrichtung 31 die tatsächlich in die Trenneinrichtung 5 eingeleitete Probenmenge bestimmt wird.

Neben dem zusätzlichen Detektor 29 am Eingang der Trennsäule 12 sind weitere zusätzliche Detektoren 32 und 33 an den Ausgängen der Umschalteinrichtung 28 angeordnet, wobei der Detektor 32 zwischen der Umschalteinrichtung 28 und dem Eingang der letzten Trennsäule 14 liegt. Die Fläche des von dem Detektor 32 gelieferten und bei fehlerfreier Funktion des Gaschromatographen mit dem Detektorsignal 19 übereinstimmenden Detektorsignals 34 ist somit proportional zu der tatsächlich in die Trennsäule 14 gelangenden Probenmenge, während die Fläche des von dem Detektor 33 gelieferten Detektorsignals 35 proportional zu den dort den Gaschromatographen verlassenden Probenmengen ist. Durch Auswertung aller Detektorsignale 18, 19, 20, 30, 34, 35 in den Auswerteeinrichtungen 24, 25, 26, 31, 36, 37 kann also genau bestimmt werden, welche Probenmengen tatsächlich in die Trennsäulen 12, 13 und 14 gelangen, so dass Fehlfunktionen der Dosiereinrichtung 2 und der Umschalteinrichtung 28 erkannt und ihre Auswirkungen auf die Analysenergebnisse 27 berücksichtigt bzw. korrigiert werden können.

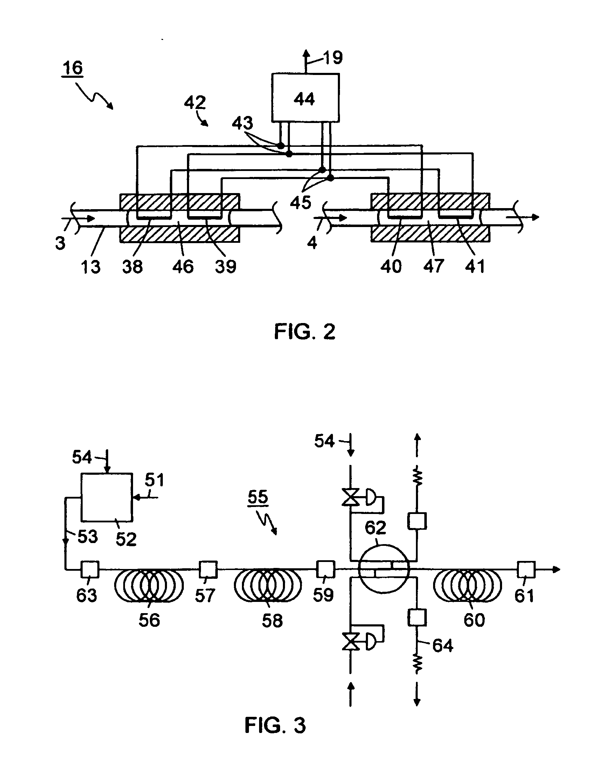

Figur 2 zeigt ein Beispiel für einen der Detektoren 15, 16 und ggf. 17 sowie 29, 32 und ggf. 33, die im Verlauf der Trenneinrichtung 5 in-line angeordnet und ohne Störung des Stoffgemischs von diesem durchlaufen werden. Der hier als Beispiel gezeigte Detektor 16 ist als Wärmeleitfähigkeitsdetektor ausgebildet und weist vier drahtförmige Heizwiderstände 38, 39, 40 und 41 auf, die in einer Brückenschaltung 42 angeordnet sind, wobei die Brückenschaltung 42 an zwei einander gegenüberliegenden Schaltungspunkten 43 aus einer Detektorschaltung 44 mit einem Strom gespeist wird und die zwischen den beiden anderen gegenüberliegenden Schaltungspunkten 45 auftretende Spannung von der Detektorschaltung 44 zur Erzeugung des Detektorsignals 19 erfasst wird. Die in der Brückenschaltung 42 einander diagonal gegenüberliegenden Heizwiderstände 38 und 39 sind am Ende der Trennsäule 13 in einem Messpfad 46 des Detektors 16 angeordnet, während die beiden übrigen Heizwiderstände 40 und 41 in einem Referenzpfad 47 angeordnet sind. Der Wärmeleitfähigkeitsdetektor 16 ist mit seinem Messpfad 46 zwischen die Trennsäule 12 und die Umschalteinrichtung 28 geschaltet, während der Referenzpfad 47 von dem Trägergas 4 durchströmt wird. Der Referenzpfad 47 kann als Messpfad und der Messpfad 46 als Referenzpfad eines anderen Detektors, z. B. 17, dienen, wenn gewährleistet ist, dass immer einer der beiden Pfade 46 und 47 von dem Trägergas 4 durchströmt wird, während das Stoffgemisch den anderen Messpfad passiert. Der Messpfad 46 und ggf. der Referenzpfad 47, sind derart ausgebildet, dass ihre inneren Querschnittsabmessungen denen der jeweils angeschlossenen Trennsäulen 13 bzw. 14 entsprechen, so dass das durchströmende mehr oder weniger getrennte Stoffgemisch nicht gestört wird. Die Heizwiderstände 38, 39, 40, 41 und die Innenwände der Pfade 46 und 47 bestehen aus Materialien, die sich gegenüber dem zu analysierenden Stoffgemisch bzw. dem Trägergas 4 inert verhalten, also beispielsweise aus Gold bzw. Siliziumdioxid (Quarz), so dass eine Veränderung des Stoffgemischs aufgrund chemischer Reaktionen ausgeschlossen ist.

Figur 3 zeigt einen Gaschromatographen zur Analyse einer Erdgasprobe 51, die nach Entnahme aus einem technischen Prozess und Aufbereitung einer Dosiereinrichtung 52 zugeführt wird. Die Dosiereinrichtung 52 dient dazu, zu einem vorgegebenen Zeitpunkt eine vorgegebene Dosiermenge der Probe 51 in Form eines kurzen und scharf begrenzten Probenpfropfes 53 in einen Trägergasstrom 54 einzuschleusen und einer Trennsäulenkombination 55 zuzuführen, in der die in dem Probenpfropf 53 enthaltenen Erdgaskomponenten getrennt und nacheinander detektiert und quantitativ bestimmt werden.

Die Trennsäulenkombination 55 besteht aus einer ersten Trennsäule 56, gefolgt von einem ersten Detektor 57, einer zweiten Trennsäule 58, gefolgt von einem zweiten Detektor 59, und einer dritten Trennsäule 60, gefolgt von einem dritten Detektor 61. Die Trennsäulen 56, 58, 60 und die Detektoren 57, 59, 61 sind in-line in einer Reihenschaltung angeordnet, wobei zwischen der zweiten Trennsäule 58 und der dritten Trennsäule 60, hier nach dem zweiten Detektor 59, eine steuerbare Umschalteinrichtung 62 angeordnet ist. Vor der ersten Trennsäule 56 ist noch ein weiterer Detektor 63 angeordnet.

Die erste Trennsäule 56 ist als WCOT-Säule mit unpolarer stationärer Phase, z. B. CP Sil 5 CB, zur Trennung von Propan und höheren Kohlenwasserstoffen, wie Propan, Butan, Pentan, Hexan, ausgebildet, die von dem ersten Detektor 57 detektiert werden.

Die zweite Trennsäule 58 ist als PLOT-Säule (Dünnschichtsäule) mit unpolarer stationärer Phase, z. B. PoraPLOT Q, zur Trennung von Kohlendioxid und Ethan ausgebildet, die von dem zweiten Detektor 59 detektiert werden.

Die dritte Trennsäule 60 ist als PLOT-Säule mit Molekularsieb, insbesondere 5 Å, als Trennphase (Molekularsiebsäule) zur Trennung von Stickstoff und Methan und erforderlichenfalls Sauerstoff und Kohlenmonoxid ausgebildet, die von dem dritten Detektor 61 detektiert werden. Andere Erdgaskomponenten dürfen nicht auf die Molekularsiebsäule 60 gelangen, weil sie nur durch eine Konditionierung der Molekularsiebsäule 60 wieder entfernt werden können. Aus diesem Grunde werden über die steuerbare Umschalteinrichtung 62 die auf das Methan folgenden Eluate, nämlich Kohlendioxid, Ethan, Propan usw., nach ihrem Austritt aus der Trennsäule 58 über einen Gaspfad 64 ausgeschleust. Dabei kann die Ansteuerung der Umschalteinrichtung 62 in Abhängigkeit von dem Erscheinen von Kohlendioxid an dem zweiten Detektor 59 oder eine vorgegebene Zeit nach dem Detektieren von Methan durch den zweiten Detektor 59 erfolgen.

Nach Detektion von n-Hexan durch den ersten Detektor 57 werden die erste und zweite Trennsäule 56, 58 über die steuerbare Umschalteinrichtung 62 mit dem Trägergas 54 rückgespült, so dass alle längerkettigen Kohlenwasserstoffe, die nach dem n-Hexan eluieren, aus der Trennsäulenkombination 55 entfernt und durch den weiteren Detektor 63 detektiert werden.

## Patentansprüche

1. Gaschromatograph zur Analyse von Erdgas mit einer Trenneinrichtung, die Stoffe eines ihr dosiert zugeführten und sie durchlaufenden Stoffgemischs trennt,
mit einem der Trenneinrichtung nachgeordneten Detektor, der in Abhängigkeit von ankommenden getrennten Stoffen Detektorsignale erzeugt,
einer an dem Detektor angeschlossenen Auswerteeinrichtung, die in Abhängigkeit von den Detektorsignalen zumindest einen Teil der getrennten Stoffe quantitativ bestimmt, zwei im Verlauf der Trenneinrichtung in-line angeordneten und ohne Zerstörung des Stoffgemischs von diesen durchlaufenen weiteren Detektoren, die in Abhängigkeit von bis dahin vollständig getrennten Stoffen des Stoffgemischs jeweltige weitere Detektorsignale erzeugen, und
jeweils einer an den weiteren Detektoren angeschlossenen weiteren Auswerteeinrichtung, die in Abhängigkeit von den jeweiligen weiteren Detektorsignalen zumindest einen Teil der bis dahin vollständig getrennten Stoffe quantitativ bestimmt, wobei die Trenneinrichtung eine erste Trennsäule (56), zweite Trennsäule (58) und dritte Trennsäule (60) aufweist, der Trenneinrichtung nachgeordnete Detektor einen dritten Detektor (61) bildet, und
die erste Trennsäule (56) gefolgt von dem ersten weiteren Detector (57), die zweite Trennsäule (58) gefolgt von dem zweiten weiteren Detektor (59) und die dritte Trennsäule (60) gefolgt von dem dritten Detektor (61) in einer Reihenschaltung angeordnet sind, **dadurch gekennzeichnet, dass**
- die erste Trennsäule (56) und der erste weitere Detektor (57) zur Trennung bzw. Detektion von Propan und höheren Kohlenwasserstoffen ausgebildet sind,
- die zweite Trennsäule (58) und der zweite weitere Detektor (59) zur Trennung bzw. Detektion von Kohlendioxid und Ethan ausgebildet sind,
- die dritte Trennsäule (60) und der dritte Detektor (61) zur Trennung bzw. Detektion von Stickstoff und Methan und erforderlichenfalls Sauerstoff und Kohlenmonoxid ausgebildet sind, und
- zwischen der zweiten Trennsäule (58) und der dritten Trennsäule (60) eine steuerbare Umschalteinrichtung (62) zur Ausschleusung von auf das Methan folgenden Eluaten vorgesehen ist.

2. Gaschromatograph nach Anspruch 1, **dadurch gekennzeichnet, dass** die weiteren Detektoren einen von dem Stoffgemisch durchströmten Messpfad aufweisen, dessen Querschnittsabmessungen zumindest annähernd den Querschnittsabmessungen der Trenneinrichtung entsprechen.

3. Gaschromatograph nach Anspruch 2, **dadurch gekennzeichnet, dass** die weiteren Detektoren Wärmeleitfähigkeitsdetektoren sind.

4. Gaschromatograph nach Anspruch 3, **dadurch gekennzeichnet, dass** jeder Wärmeleitfähigkeitsdetektor in einer Brückenschaltung angeordnete Heizwiderstände aufweist, von denen zwei in den beiden unterschiedlichen Brückenhälften einander diagonal gegenüberliegende Heizwiderstände in dem Messpfad angeordnet sind.

5. Gaschromatograph nach einem der vorangehenden Ansprüche, **dadurch gekennzeichnet, dass** nach dem Detektieren eines vorgegebenen höheren Kohlenwasserstoffs, insbesondere n-Hexan, mittels des ersten weiteren Detektors (57) die erste und zweite Trennsäule (56, 58) über die steuerbare Umschalteinrichtung (62) mit Trägergas (54) rückspülbar sind und dass vor der ersten Trennsäule (56) ein weiterer Detektor (63) zur Detektion von auf den vorgegebenen höheren Kohlenwasserstoff folgenden Eluaten angeordnet ist.

6. Gaschromatograph nach einem der vorangehenden Ansprüche, **dadurch gekennzeichnet, dass** die erste Trennsäule (56) eine WCOT(wall coated open tubular)-Säule mit unpolarer stationärer Phase ist.

7. Gaschromatograph nach einem der vorangehenden Ansprüche, **dadurch gekennzeichnet, dass** die zweite Trennsäule (58) eine PLOT(porous layer open tubular)-Säule mit einer unpolaren stationären Phase ist.

8. Gaschromatograph nach einem der vorangehenden Ansprüche, **dadurch gekennzeichnet, dass** die dritte Trennsäule (60) eine PLOT-Säule mit Molekularsieb, insbesondere 5 Ä, ist.

## Claims

1. Gas chromatograph for analysing natural gas having a separation device, which separates substances of a substance mixture that is fed to said device in a metered fashion and passes through said device,
having a detector which is arranged downstream of the separation device and generates detector signals as a function of incoming separated substances,
an evaluation device which is connected to the detector and quantitatively determines, as a function of the detector signals, at least part of the separated substances,
two further detectors, which are arranged in-line in the separation device, through which detectors the substance mixture passes without the destruction of said substance mixture, and which detectors generate respective further detector signals as a function of substances of the substance mixture which have been completely separated up to that point, and
in each case one further evaluation device, which is connected to the further detectors and quantitatively determines at least part of the substances which have been completely separated up to that point as a function of the respective further detector signals, wherein the separation device has a first separation column (56), a second separation column (58) and a third separation column (60),
the detector downstream of the separation device forms a third detector (61), and
the first separation column (56) followed by the first further detector (57), the second separation column (58) followed by the second further detector (59) and the third separation column (60) followed by the third detector (61) are arranged in series connection, **characterized in that**
- the first separation column (56) and the first further detector (57) are configured for separating and detecting propane and higher hydrocarbons,
- the second separation column (58) and the second further detector (59) are configured for separating and detecting carbon dioxide and ethane,
- the third separation column (60) and the third detector (61) are configured for separating and detecting nitrogen and methane and, if required, oxygen and carbon monoxide, and
- provided between the second separation column (58) and the third separation column (60) is a controllable switchover device (62) for discharging eluates following the methane.

2. Gas chromatograph according to Claim 1, **characterized in that** the further detectors have a measurement path, through which the substance mixture flows and whose cross-sectional dimensions correspond at least approximately to the cross-sectional dimensions of the separation device.

3. Gas chromatograph according to Claim 2, **characterized in that** the further detectors are thermal conductivity detectors.

4. Gas chromatograph according to Claim 3, **characterized in that** each thermal conductivity detector has heating resistors which are arranged in a bridge circuit and of which two heating resistors which are located diagonally opposite each other in the two different bridge halves are arranged in the measurement path.

5. Gas chromatograph according to one of the preceding claims, **characterized in that** after the detection of a prespecified higher hydrocarbon, preferably n-hexane, using the first further detector (57), the first and second separation columns (56, 58) can be backflushed, via the controllable switchover device (62), with carrier gas (54) and **in that** before the first separation column (56) a further detector (63) is arranged for detecting eluates following the prespecified higher hydrocarbon.

6. Gas chromatograph according to one of the preceding claims, **characterized in that** the first separation column (56) is a WCOT (wall coated open tubular) column with non-polar stationary phase.

7. Gas chromatograph according to one of the preceding claims, **characterized in that** the second separation column (58) is a PLOT (porous layer open tubular) column with a non-polar stationary phase.

8. Gas chromatograph according to one of the preceding claims, **characterized in that** the third separation column (60) is a PLOT column with molecular sieve, preferably 5 Å.

## Revendications

1. Chromatographe en phase gazeuse pour l'analyse du gaz naturel, comprenant un dispositif de séparation, qui sépare des substances d'un mélange de substances qui lui est envoyé de manière dosée et qui le traverse, comprenant un détecteur qui est monté en aval du dispositif de séparation et qui produit des signaux de détecteur, qui dépendent des substances séparées arrivantes,
un dispositif d'exploitation, qui est raccordé au détecteur et qui, en fonction des signaux du détecteur, détermine quantitativement au moins une partie des substances séparées , deux autres détecteurs, montés en ligne avec le dispositif de séparation et traversés par le mélange de substances sans destruction de celui-ci, qui, en fonction des substances séparées complètement jusqu'ici du mélange de substances, produisent d'autres signaux respectifs de détecteur, et respectivement un autre dispositif d'exploitation, qui est raccordé aux autres détecteurs et qui, en fonction des autres signaux respectifs de détecteur, détermine quantitativement au moins une partie des substances séparées complètement jusqu'ici, le dispositif de séparation ayant une première colonne ( 56 ) de séparation, une deuxième colonne ( 58 ) de séparation et une troisième colonne ( 60 ) de séparation, le détecteur disposé en aval du dispositif de séparation formant un troisième détecteur ( 61 ), et
la première colonne ( 56 ) de séparation est suivie du premier autre détecteur ( 57 ), la deuxième colonne ( 58 ) de séparation est suivie du deuxième autre détecteur ( 59 ) et la troisième colonne ( 60 ) de séparation est suivie de l'autre troisième détecteur ( 61 ) suivant un montage en série, **caractérisé en ce que**
- la première colonne ( 56 ) de séparation et le premier autre détecteur ( 57 ) sont constitués pour la séparation ou la détection du propane et d'hydrocarbures supérieurs,
- la deuxième colonne ( 58 ) de séparation et le deuxième autre détecteur ( 59 ) sont constitués pour la séparation et la détection du dioxyde de carbone et de l'éthane,
- la troisième colonne ( 60 ) de séparation et le troisième détecteur ( 61 ) sont constitués pour la séparation et la détection de l'azote et du méthane et, si cela est nécessaire, de l'oxygène et du monoxyde de carbone, et
- il est prévu, entre la deuxième colonne ( 58 ) de séparation et la troisième colonne ( 60 ) de séparation, un dispositif ( 62 ) de commutation, qui peut être commandé et qui est destiné à la sortie d'éluats suivant le méthane.

2. Chromatographe en phase gazeuse suivant la revendication 1, **caractérisé en ce que** les autres détecteurs ont un trajet de mesure, qui est parcouru par le mélange de substances et dont les dimensions de la section transversale correspondent au moins à peu près aux dimensions de la section transversale du dispositif de séparation.

3. Chromatographe en phase gazeuse suivant la revendication 2, **caractérisé en ce que** les autres détecteurs sont des détecteurs de conductibilité thermique.

4. Chromatographe en phase gazeuse suivant la revendication 3, **caractérisé en ce que** chaque détecteur de conductibilité thermique comportent des résistances de chauffage, qui sont montées dans un circuit en pont et dont deux résistances de chauffage opposées en diagonale l'une à l'autre dans les deux moitiés différentes du pont sont montées dans le trajet de mesure.

5. Chromatographe en phase gazeuse suivant l'une des revendications précédentes, **caractérisé en ce que**, après la détection d'un hydrocarbure supérieur prescrit, notamment du n-hexane, on peut, au moyen du premier autre détecteur ( 57 ), laver en retour par du gaz ( 54 ) porteur la première et la deuxième colonne ( 56, 58 ) de séparation par le dispositif ( 62 ) de commutation qui peut être commandé et **en ce qu'**avant la première colonne ( 56 ) de séparation est monté un autre détecteur ( 63 ) de détection d'éluats suivant l'hydrocarbure supérieur prescrit.

6. Chromatographe en phase gazeuse suivant l'une des revendications précédentes, **caractérisé en ce que** la première colonne ( 56 ) de séparation est une colonne WCOT ( wall coated open tubular ) à phase stationnaire non polaire.

7. Chromatographe en phase gazeuse suivant l'une des revendications précédentes, **caractérisé en ce que** la deuxième colonne ( 58 ) de séparation est une colonne PLOT ( porous layer open tubular ) ayant une phase stationnaire non polaire.

8. Chromatographe en phase gazeuse suivant l'une des revendications précédentes, **caractérisé en ce que** la troisième colonne ( 60 ) de séparation est une colonne PLOT à tamis moléculaire, notamment de 5 A.
